# EUROPÄISCHE PATENTANMELDUNG

(11) **EP 3 553 925 A1**
(43) Veröffentlichungstag der Anmeldung: **16.10.2019**
(21) Anmeldenummer: 18166920.1
(22) Anmeldetag: 12.04.2018
(51) Int. Cl.: H02K 5/18, H02K 5/20, H02K 15/14

(54) **KÜHLOPTIMIERTES GEHÄUSE EINER MASCHINE**

(71) Anmelder: Siemens Aktiengesellschaft, 80333 München (DE)
(72) Erfinder: Bott, Erich, 97618 Hollstadt (DE); Seufert, Reiner, 97616 Salz (DE); Vollmer, Rolf, 36129 Gersfeld (DE)

(57) **Zusammenfassung**

Die Erfindung betrifft ein Verfahren zur Herstellung einer Kühlstruktur auf einer Oberfläche eines Gehäuses (1) einer dynamoelektrischen rotatorischen Maschine (M,MG). Mittels eines additiven Fertigungsverfahrens wird schichtweise wenigstens ein Material auf die Oberfläche des Gehäuses (1) unter Aussparung wenigstens eines vorgegebenen Bereichs aufgebracht. Durch das Aufbringen von Material werden wenigstens zwei Erhebungen (4,41,42,43,6) gebildet, wobei durch das Aussparen eines vorgegebenen Bereichs ein Kühlkanal (3,31) gebildet wird. Die Erhebungen werden derart gebildet, dass zumindest zwischen zwei Erhebungen ein Kühlkanal ausgebildet wird. Ferner betrifft die Erfindung eine derart hergestellte Kühlstruktur (K), ein Gehäuse (1) und eine dynamoelektrische Maschine (M,MG).

## Beschreibung

Die Erfindung betrifft ein Verfahren zur Herstellung einer Kühlstruktur auf einer Oberfläche eines Gehäuses einer dynamoelektrischen rotatorischen Maschine.

Bei luftgekühlten dynamoelektrischen rotatorischen Maschinen, insbesondere Elektromotoren, wird Wärme über eine möglichst große Gehäuseoberfläche in Verbindung mit einer Luftströmung abgeführt. Hierzu werden mit Kühlrippen versehene Gehäuse verwendet.

Eine Herstellung derartiger Gehäuse ist jedoch erst ab großen Stückzahlen wirtschaftlich. Zudem kann bei der Herstellung nicht flexibel auf unterschiedliche Umweltbedingungen eines Kunden eingegangen werden.

Der Erfindung liegt daher die Aufgabe zugrunde, die Herstellung zu verbessern.

Die Lösung der Aufgabe gelingt durch ein Verfahren gemäß Anspruch 1, d. h. ein Verfahren zur Herstellung einer Kühlstruktur auf einer Oberfläche eines Gehäuses einer dynamoelektrischen rotatorischen Maschine, wobei mittels eines additiven Fertigungsverfahrens schichtweise wenigstens ein Material auf die Oberfläche des Gehäuses unter Aussparung wenigstens eines vorgegebenen Bereichs, vorzugsweise mehrerer vorgegebener Bereiche, aufgebracht wird, wobei durch das Aufbringen von Material wenigstens zwei Erhebungen gebildet werden, wobei durch das Aussparen eines vorgegebenen Bereichs ein Kühlkanal gebildet wird, wobei die Erhebungen derart gebildet werden, dass zumindest zwischen zwei Erhebungen ein Kühlkanal ausgebildet wird.

Ferner gelingt die Lösung der Aufgabe durch eine Kühlstruktur gemäß Anspruch 10, d.h. eine Kühlstruktur auf einer Oberfläche eines Gehäuses einer dynamoelektrischen rotatorischen Maschine hergestellt mittels des Verfahrens nach einem der Ansprüche 1 bis 9 .

Zudem gelingt die Lösung der Aufgabe durch ein Gehäuse gemäß Anspruch 11, d.h. ein Gehäuse aufweisend eine Kühlstruktur nach Anspruch 10.

Außerdem gelingt die Lösung der Aufgabe durch eine dynamoelektrische rotatorische Maschine gemäß Anspruch 14, d.h. eine dynamoelektrische rotatorische Maschine mit einem Gehäuse nach einem der Ansprüche 11 bis 13.

Das erfindungsgemäße Verfahren wird vorzugsweise zur Herstellung einer Kühlstruktur auf einer Oberfläche eines Gehäuses einer selbstgekühlten dynamoelektrischen rotatorischen Maschine, insbesondere eines Motors, eingesetzt. Jedoch kann es auch bei eigengekühlten und fremdgekühlten, insbesondere fremdbelüfteten, Maschinen eingesetzt werden.

Die Erfindung begünstigt eine Entwärmung über Konvektion und/oder Strahlung.

Als Kühlmittel wird vorzugsweise ein Fluid eingesetzt. Es können Gase wie beispielsweise Luft oder auch Liquide wie beispielsweise Wasser oder ein Wasser-Glykol-Gemisch eingesetzt werden.

Vorteilhaft wird die Kühlstruktur auf der Oberfläche des Gehäuses einer permanenterregten Synchronmaschine, insbesondere eines Servomotors, ausgebildet. Vorzugsweise ist die Maschine mit Selbstkühlung mit dem Kühlmittel Luft ausgeführt.

Die Kühlstruktur bewirkt vorzugsweise eine Vergrößerung der Oberfläche des Gehäuses, wodurch Wärme besser und schneller abgeführt werden kann. Das Kühlmittel durchströmt hierzu die Kühlkanäle und führt die Wärme ab.

Weitere vorteilhafte Ausführungsformen ergeben sich aus den Unteransprüchen.

In einer vorteilhaften Ausführungsform der Erfindung ist das additive Fertigungsverfahren das MPA-Verfahren.

Insbesondere für geringe Stückzahlen von dynamoelektrischen rotatorischen Maschinen ist dies vorteilhaft.

Es können hohe Werkzeugkosten reduziert werden, die bei einem Aluminiumdruckguss des Gehäuses anfallen würden. Es besteht jedoch auch die Möglichkeit, auch in großer Stückzahl gefertigte Standard-Gehäuse mittels des additiven Fertigungsverfahrens zu modifizieren. Beispielsweise kann eine selbstgekühlte Maschine, insbesondere ein Servomotor, so modifiziert werden, dass eine effiziente Fremdbelüftung erreicht wird. Dies schafft Kostenvorteile.

Beim MPA-Verfahren (Metall-Pulver-Auftrags-Verfahren) wird ein Hauptgas, vorzugsweise Wasserdampf, in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe kinetische Energie des Pulverpartikels wird beim Aufprall in Wärme umgewandelt, wodurch der Partikel anhaftet. Da die Pulverpartikel nicht aufgeschmolzen werden, findet nur ein geringer Energieeintrag in das Bauteil statt. Beim MPA-Verfahren können mehrere Düsen gleichzeitig verschiedene Pulverpartikel auftragen. Somit kann auch ein Bauteil geschaffen werden, das wenigstens zwei unterschiedliche Materialien aufweist.

Jedoch sind auch andere additive Fertigungsverfahren möglich. Beispielsweise ist das additive Fertigungsverfahren ein 3D-Metal-Print-Verfahren (3DMP), ein additives Lichtbogen-Schweiß-Verfahren, ein Laser-Auftrag-Schweiß-Verfahren, ein Plasma-Pulver-Auftrag-Schweiß-Verfahren, ein DMD-Verfahren (Direct Metal Deposition) oder ein LMD-Verfahren (Laser Metal Deposition).

Das additive Verfahren bietet den Vorteil, dass dieses dazu ausgebildet ist, voll automatisiert abzulaufen. Dies ermöglicht ein prozesssicheres Verfahren. Zudem bietet das additive Verfahren den Vorteil, dass insbesondere Kleinserien und/oder Prototypen flexibel und schnell gefertigt werden können, auch unter Berücksichtigung geänderter Geometrien.

Als Material für die additive Fertigung wird vorzugsweise Aluminium oder Kupfer oder deren Legierungen eingesetzt.

Kupfer bietet den Vorteil, dass es eine hohe Wärmeleitfähigkeit aufweist und somit Wärme schnell und effektiv abgeführt werden kann. Kupfer bringt daher Vorteile mit sich, wenn Wärme über lange Strecken geleitet werden muss.

Aluminium ist hingegen kostengünstig. Vorzugsweise weist auch das Gehäuse Aluminium auf, sodass kein Materialübergang entsteht.

In einer weiteren vorteilhaften Ausführungsform der Erfindung werden die Erhebungen derart gebildet, dass die Erhebungen sich wenigstens im Wesentlichen in Richtung einer Maschinenachse erstrecken.

Vorzugsweise werden die Erhebungen als Rippen bzw. Kühlrippen, die sich wenigstens im Wesentlichen in Richtung der Maschinenachse erstrecken, ausgebildet. Dies gewährleistet eine schnelle Abführung von Wärme mittels des Kühlmittels durch den zwischen zwei Kühlrippen ausgebildeten Kühlkanal.

Jedoch können die Erhebungen auch als Kühlrippen ausgebildet sein, die in einem Winkel zwischen 0° und 180°, vorzugsweise zwischen 80° und 100°, ausgebildet sind.

In einer weiteren vorteilhaften Ausführungsform der Erfindung werden die Erhebungen derart gebildet, dass die Erhebungen sich von einem vorderen axialen Ende der Maschine zu einem hinteren axialen Ende der Maschine erstrecken.

In einer weiteren vorteilhaften Ausführungsform der Erfindung werden die Erhebungen als parallel zu der Maschinenachse verlaufende Rippen gebildet werden.

In einer weiteren vorteilhaften Ausführungsform der Erfindung werden Erhebungen als wellenförmige oder spiralförmige Rippen gebildet werden.

Wellenförmige Rippen haben den Vorteil, dass eine Luftströmung entlang der Rippen verwirbelt wird. Ein Wärmeübergang auf eine turbulente Luftströmung ist hierbei effizienter als auf eine laminare Luftströmung.

Spiralförmige Rippen sind vorteilhaft wie ein mehrgängiges Gewinde geformt.

Insbesondere eine Fertigung wellenförmiger bzw. spiralförmiger Rippen kann nicht durch konventionelle Verfahren, wie z. B. durch Druckguss, jedoch durch das erfindungsgemäße Verfahren erfolgen.

In einer weiteren vorteilhaften Ausführungsform der Erfindung werden die Erhebungen als Zapfen gebildet, wobei wenigstens zwei Zapfen aneinandergereiht zu einer Zapfenreihe, vorzugsweise wenigstens im Wesentlichen in Richtung der Maschinenachse, angeordnet werden.

Dies bringt eine Verwirbelung der Luftströmung mit sich, eine Vergrößerung der Gehäuseoberfläche. Zugleich wird im Gegensatz zu Rippen Material eingespart.

In einer weiteren vorteilhaften Ausführungsform der Erfindung werden die Zapfen zweier bezüglich einer Umfangsrichtung gegenüberliegender Zapfenreihen gegenständig oder wechselständig angeordnet.

In einer weiteren vorteilhaften Ausführungsform der Erfindung wird wenigstens eine Erhebung, insbesondere eine Rippe, aufweisend wenigstens einen Vorsprung in Umfangsrichtung und/oder wenigstens einen Vorsprung in Gegenumfangsrichtung gebildet. Vorteilhaft ist die Gegenumfangsrichtung zur Umfangsrichtung entgegengesetzt.

Diese Ausführungsform bringt eine Vergrößerung der Gehäuseoberfläche mit sich, durch welche Wärme optimal abgegeben werden kann.

In einer weiteren vorteilhaften Ausführungsform der Erfindung ist die beschriebene Kühlstruktur auf einem Gehäuse ausgebildet. In einer weiteren vorteilhaften Ausführungsform der Erfindung ist das Gehäuse von einer Haube umgeben.

In einer weiteren vorteilhaften Ausführungsform der Erfindung ist die Haube mittels eines additiven Fertigungsverfahrens gefertigt.

Vorteilhaft wird die Haube mittels der bereits weiter oben erwähnten additiven Fertigungsverfahren gefertigt.

Die Erfindung bietet den Vorteil, dass je nach Größe der Maschine, Kühlungsart, abzuführender Wärme und/oder verwendeter Materialien, insbesondere des Gehäuses, die Kühlstruktur optimal angepasst werden kann.

Ferner bietet die Erfindung den Vorteil, dass Wärme aus der dynamoelektrischen rotatorischen Maschine (insbesondere aus Wicklung und Blechpaket) über die Erhebungen, welche die Oberfläche des Gehäuses vergrößern, aus der Maschine hinausgeführt und über die von Fluiden, insbesondere Luft, durchströmten Kühlkanäle abgeführt wird.

Die Kühlstruktur kann mittels des erfindungsgemäßen Verfahrens schnell und günstig an kundenspezifische Vorgaben oder Umweltbedingungen angepasst werden.

Beispielsweise können die Erhebungen je nach Anwendungsgebiet dicker oder dünner ausgebildet werden. Die Kühlkanäle können bei staubigen Anwendungsgebieten z. B. glatt und verstopfungsarm ausgebildet werden, bei korrosiven Umgebungseinflüssen können sie veredelt werden.

Ferner können verschiedene Materialien für die Ausbildung der Erhebungen verwendet werden. Zudem können Materialmischungen verwendet werden oder Materialgradienten in den Erhebungen realisiert werden.

Bypässe zur Reduktion von Schwingungen und Geräuschen können außerdem leicht realisiert werden.

Im Folgenden wird die Erfindung anhand der in den Figuren dargestellten Ausführungsbeispiele näher beschrieben und erläutert. Es zeigen:
- FIG 1: einen Ablauf eines Verfahrens zur Herstellung einer Kühlstruktur auf einer Oberfläche eines Gehäuses einer dynamoelektrischen rotatorischen Maschine,
- FIG 2: einen Querschnitt durch eine Ausgestaltung eines kreuzförmigen Gehäuses einer dynamoelektrischen rotatorischen Maschine mit einer Kühlstruktur K und einer Haube,
- FIG 3: einen weiteren Querschnitt durch eine Ausgestaltung eines kreisförmigen Gehäuses der dynamoelektrischen rotatorischen Maschine mit der Kühlstruktur und einer Haube,
- FIG 4: einen weiteren Querschnitt durch eine Ausgestaltung des kreuzförmigen Gehäuses der dynamoelektrischen rotatorischen Maschine mit der Kühlstruktur und einer additiv gefertigten Haube,
- FIG 5: einen weiteren Querschnitt durch eine Ausgestaltung des kreuzförmigen Gehäuses der dynamoelektrischen rotatorischen Maschine mit der Kühlstruktur und einer additiv gefertigten Haube (Kühlstruktur umfasst Rippen und T-Rippen),
- FIG 6: einen weiteren Querschnitt durch eine Ausgestaltung des kreuzförmigen Gehäuses der dynamoelektrischen rotatorischen Maschine mit der Kühlstruktur und einer additiv gefertigten Haube (Kühlstruktur umfasst L-Rippen),
- FIG 7: eine Draufsicht auf eine Ausgestaltung einer dynamoelektrischen rotatorischen Maschine mit Gehäuse mit parallel ausgebildeten Rippen,
- FIG 8: eine Draufsicht auf eine Ausgestaltung einer dynamoelektrischen rotatorischen Maschine mit Gehäuse mit wellenförmig ausgebildeten Rippen und
- FIG 9: eine Draufsicht auf eine Ausgestaltung einer dynamoelektrischen rotatorischen Maschine mit Gehäuse mit Zapfen.

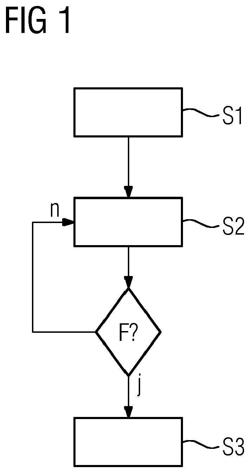

FIG 1 zeigt einen Ablauf eines Verfahrens zur Herstellung einer Kühlstruktur auf einer Oberfläche eines Gehäuses einer dynamoelektrischen rotatorischen Maschine.

In Verfahrensschritt S1 wird ein Gehäuse einer dynamoelektrischen rotatorischen Maschine bereitgestellt. In Verfahrensschritt S2 wird eine Schicht eines Materials, vorzugsweise Aluminium, unter Aussparung wenigstens eines vorgegebenen Bereichs, vorzugsweise mehrerer vorgegebener Bereiche, aufgebracht. Die Bildung von Erhebungen wird durch ein schichtweises Aufbringen von Material bewerkstelligt, weshalb vorzugsweise weitere Schichten aufgebracht werden.

F? kennzeichnet die Frage, ob die Erhebungen bereits wie gewünscht gebildet wurden. Wenn nein - mit n gekennzeichnet - wird in Verfahrensschritt S2 eine weitere Schicht des Materials aufgetragen.

Wenn ja - mit j gekennzeichnet - wird die Kühlstruktur auf der Oberfläche des Gehäuses in Verfahrensschritt S3 fertig gestellt. Es ist kein Aufbringen einer weiteren Materialschicht nötig.

Es kann zudem noch eine spanende Bearbeitung der aufgebrachten Erhebungen erfolgen, z. B. eine Gewindebohrung.

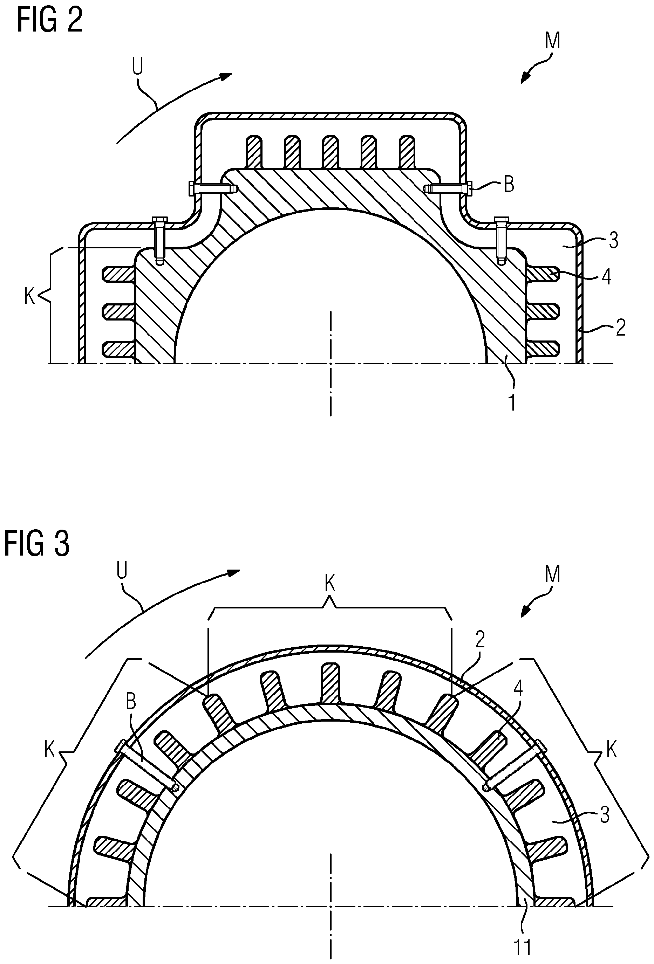

FIG 2 zeigt einen Querschnitt durch eine Ausgestaltung eines kreuzförmigen Gehäuses 1 einer dynamoelektrischen rotatorischen Maschine M mit einer Kühlstruktur K und einer Haube 2. Das Gehäuse 1 ist in der Figur kreuzförmig ausgestaltet. Jedoch sind auch andere Gehäuseformen möglich.

Auf der Oberfläche des Gehäuses 1 sind Erhebungen ausgebildet, die mittels des in FIG 1 beschriebenen additiven Fertigungsverfahrens gebildet wurden. Die Erhebungen sind in der Figur als Rippen 4 ausgebildet, die einer Oberflächenvergrößerung des Gehäuses 1 dienen. Zwischen zwei Rippen befindet sich ein Kühlkanal 3, der von Fluiden zur Kühlung durchströmt werden kann. Vorzugsweise wird der Kühlkanal 3 von Luft durchströmt. Die Rippen 4 sind in definierten Abständen entlang einer Umfangsrichtung U ausgebildet.

Die Rippen 4 erstrecken sich vorzugsweise wenigstens im Wesentlichen in Richtung einer Maschinenachse. Die Rippen 4 sind vorzugsweise parallel zu einer Maschinenachse ausgeführt. Die Rippen 4 erstrecken sich vorzugsweise von einem vorderen axialen Ende der Maschine M zu einem hinteren axialen Ende der Maschine M.

Die Figur zeigt zudem die Haube 2, die mittels eines Befestigungsmittels B, z. B. einer Schraube, am Gehäuse 1 befestigt ist.

FIG 3 zeigt einen weiteren Querschnitt durch eine Ausgestaltung eines kreisförmigen Gehäuses 11 der dynamoelektrischen rotatorischen Maschine M mit der Kühlstruktur K und einer Haube 2. Das Gehäuse 11 ist in der Figur im Gegensatz zu FIG 2 kreisförmig ausgestaltet.

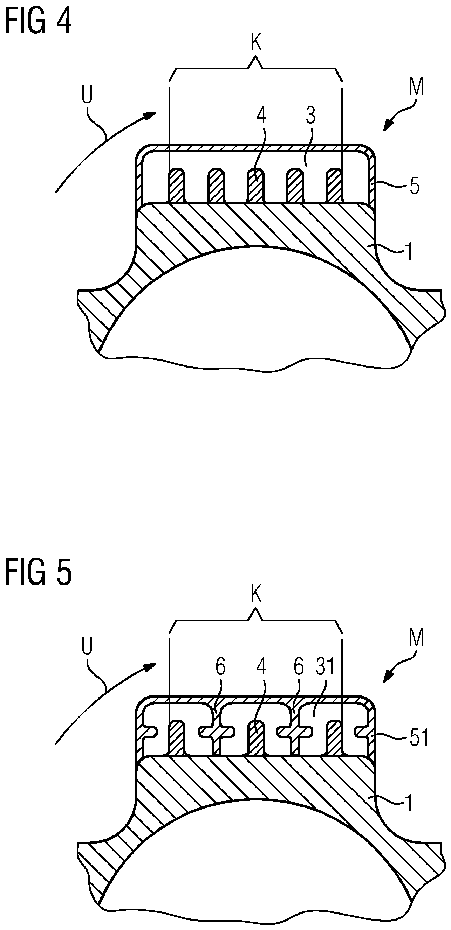

FIG 4 zeigt einen weiteren Querschnitt durch eine Ausgestaltung des kreuzförmigen Gehäuses 1 der dynamoelektrischen rotatorischen Maschine M mit der Kühlstruktur K und einer additiv gefertigten Haube 5. Die additiv gefertigte Haube 5 bietet den Vorteil, dass Wärme besser abgeleitet werden kann, da sie am Gehäuse angebunden ist und daher eine Wärmeableitung noch effizienter ist. Vorteilhaft wird die additiv gefertigte Haube 5 während des additiven Fertigungsverfahrens schichtweise auf die Oberfläche des Gehäuses aufgebracht.

FIG 5 zeigt einen weiteren Querschnitt durch eine Ausgestaltung des kreuzförmigen Gehäuses 1 der dynamoelektrischen rotatorischen Maschine M mit der Kühlstruktur K und einer additiv gefertigten Haube 51. Die Kühlstruktur K umfasst Rippen 4 und T-Rippen 6 (aufweisend einen Vorsprung in Umfangsrichtung U und einen Vorsprung in Gegenumfangsrichtung).

Die T-Rippe bietet eine erweiterte Oberflächenvergrößerung (größer als beispielsweise bei Zapfen).

Die T-Rippen 6 sind vorzugsweise zur Schwingungs- und Geräuschoptimierung mit der Haube 51 verbunden. Dies hat zudem den Vorteil, dass die Kühlkanäle 31 voneinander getrennt ausgeführt sind und beispielsweise von verschiedenen Fluiden durchströmt werden können (z. B. wird ein erster Kühlkanal von Luft durchströmt und ein zweiter Kühlkanal von Wasser) oder von Fluiden in verschiedenen Richtungen durchströmt werden können.

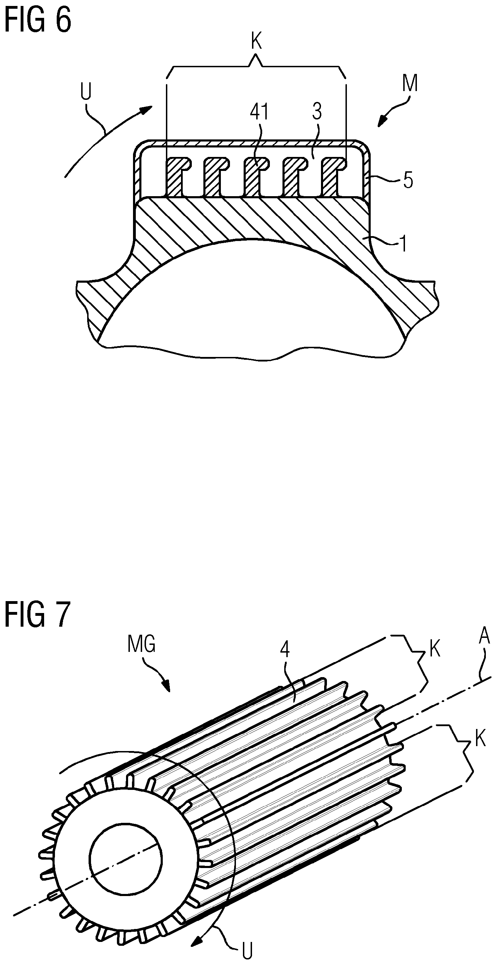

FIG 6 zeigt einen weiteren Querschnitt durch eine Ausgestaltung des kreuzförmigen Gehäuses 1 der dynamoelektrischen rotatorischen Maschine M mit der Kühlstruktur K und einer additiv gefertigten Haube 5. Die Kühlstruktur K umfasst L-Rippen 41, die eine erweiterte Oberflächenvergrößerung bieten (größer als beispielsweise bei normalen Rippen).

Die Figur zeigt zudem eine andere Ausführung der Haube 5: Die Haube 5 reicht nicht nur bis zum Rand des Gehäuses 1 (vgl. FIG 4), sondern wird entlang des Gehäuses 1 ausgebildet.

FIG 7 zeigt eine Draufsicht auf eine Ausgestaltung einer dynamoelektrischen rotatorischen Maschine mit Gehäuse MG mit parallel ausgebildeten Rippen 4. Die Rippen 4 sind in der Figur parallel zu einer Maschinenachse A auf der Oberfläche des Gehäuses von einem vorderen axialen Ende bis zu einem hinteren axialen Endes des Gehäuses ausgebildet und stellen die Kühlstruktur K dar. Jedoch können die Rippen 4 auch in einem Winkel zur Maschinenachse A, also geschrägt, ausgebildet sein.

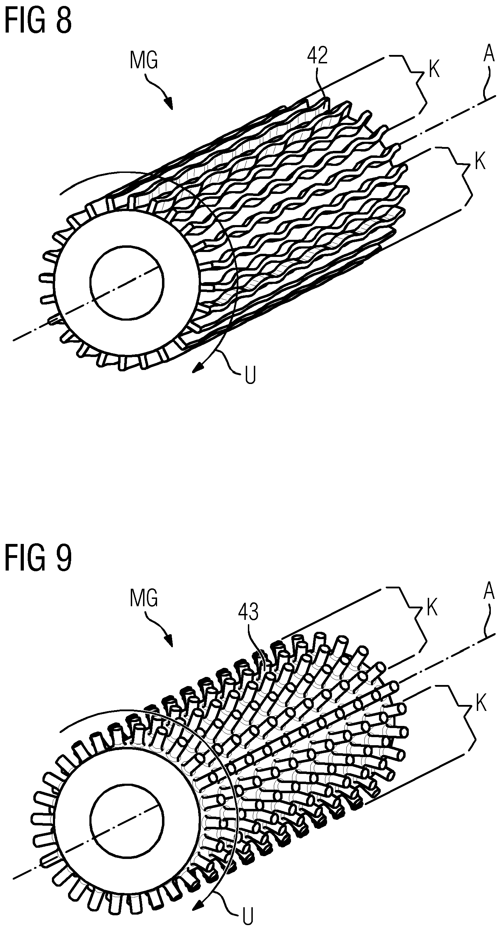

FIG 8 zeigt eine Draufsicht auf eine Ausgestaltung einer dynamoelektrischen rotatorischen Maschine mit Gehäuse MG mit wellenförmig ausgebildeten Rippen 42. Die wellenförmig ausgebildeten Rippen 42 sind in der Figur parallel zu einer Maschinenachse A auf der Oberfläche des Gehäuses von einem vorderen axialen Ende bis zu einem hinteren axialen Endes des Gehäuses ausgebildet und stellen die Kühlstruktur K dar. Jedoch können die wellenförmig ausgebildeten Rippen 42 auch in einem Winkel zur Maschinenachse A, also geschrägt, ausgebildet sein.

FIG 9 zeigt eine Draufsicht auf eine Ausgestaltung einer dynamoelektrischen rotatorischen Maschine mit Gehäuse MG mit Zapfen 43. Vorteilhaft sind die Zapfen entlang der Maschinenachse A ausgebildet. Die Zapfen 43 sind in der Figur gleichständig angeordnet, können jedoch auch wechselständig oder in einer anderen Form angeordnet sein. Die Zapfen 43 sind auf der Oberfläche des Gehäuses wenigstens im Wesentlichen von einem vorderen axialen Ende bis zu einem hinteren axialen Endes des Gehäuses ausgebildet und stellen die Kühlstruktur K dar.

Die Zapfen 43 können eine kreisförmige Bodenfläche (Bodenfläche ist die Fläche, an welcher der Zapfen und das Gehäuse aneinander angrenzen), eine ovale Bodenfläche, eine elliptische Bodenfläche, eine quadratische Bodenfläche, eine rechteckige Bodenfläche, eine quadratische Bodenfläche mit abgerundeten Ecken oder eine rechteckige Bodenfläche mit abgerundeten Ecken haben. Jedoch sind auch andere Formen möglich.

Es ist überdies möglich, vorzugsweise während des additiven Fertigungsverfahrens, die Kühlstruktur K, die andere Rippenarten (z. B. Rippen 4, L-Rippen 41, wellenförmige Rippen 42) oder Zapfen 43 umfasst, mit der jeweiligen Haube 5 bzw. 51 zu verbinden.

## Patentansprüche

1. Verfahren zur Herstellung einer Kühlstruktur auf einer Oberfläche eines Gehäuses (1) einer dynamoelektrischen rotatorischen Maschine (M,MG),
**dadurch gekennzeichnet, dass** mittels eines additiven Fertigungsverfahrens schichtweise wenigstens ein Material auf die Oberfläche des Gehäuses (1) unter Aussparung wenigstens eines vorgegebenen Bereichs, vorzugsweise mehrerer vorgegebener Bereiche, aufgebracht wird,
wobei durch das Aufbringen von Material wenigstens zwei Erhebungen (4,41,42,43,6) gebildet werden,
wobei durch das Aussparen eines vorgegebenen Bereichs ein Kühlkanal (3,31) gebildet wird,
wobei die Erhebungen derart gebildet werden, dass zumindest zwischen zwei Erhebungen ein Kühlkanal ausgebildet wird.

2. Verfahren nach Anspruch 1, wobei das additive Fertigungsverfahren das MPA-Verfahren ist.

3. Verfahren nach einem der Ansprüche 1 oder 2, wobei die Erhebungen (4,41,42,43,6) derart gebildet werden, dass die Erhebungen sich wenigstens im Wesentlichen in Richtung einer Maschinenachse (A) erstrecken.

4. Verfahren nach einem der Ansprüche 1 bis 3, wobei die Erhebungen (4,41,42,43,6) derart gebildet werden, dass die Erhebungen sich von einem vorderen axialen Ende der Maschine (M,MG) zu einem hinteren axialen Ende der Maschine erstrecken.

5. Verfahren nach einem der Ansprüche 1 bis 4, wobei die Erhebungen (4,41,42,43,6) als parallel zu der Maschinenachse (A) verlaufende Rippen (4,41) gebildet werden.

6. Verfahren nach einem der Ansprüche 1 bis 4, wobei die Erhebungen (4,41,42,43,6) als wellenförmige Rippen (42) oder spiralförmige Rippen gebildet werden.

7. Verfahren nach Anspruch 1, wobei die Erhebungen (4,41,42,43,6) als Zapfen (43) gebildet werden, wobei wenigstens zwei Zapfen aneinandergereiht zu einer Zapfenreihe, vorzugsweise wenigstens im Wesentlichen in Richtung der Maschinenachse (A), angeordnet werden.

8. Verfahren nach einem der Ansprüche 1 oder 7, wobei die Zapfen (43) zweier bezüglich einer Umfangsrichtung (U) gegenüberliegender Zapfenreihen gegenständig oder wechselständig angeordnet werden.

9. Verfahren nach einem der Ansprüche 1 bis 8, wobei wenigstens eine Erhebung (4,41,42,43,6), insbesondere eine Rippe (4,41), aufweisend wenigstens einen Vorsprung in Umfangsrichtung (U) und/oder wenigstens einen Vorsprung in Gegenumfangsrichtung gebildet wird.

10. Kühlstruktur (K) auf einer Oberfläche eines Gehäuses (1) einer dynamoelektrischen rotatorischen Maschine (M,MG) hergestellt mittels des Verfahrens nach einem der Ansprüche 1 bis 9.

11. Gehäuse (1) aufweisend eine Kühlstruktur (K) nach Anspruch 10.

12. Gehäuse (1) nach Anspruch 11 umgeben von einer Haube (2,5,51) .

13. Gehäuse nach einem der Ansprüche 11 oder 12, wobei die Haube (5,51) mittels eines additiven Fertigungsverfahrens gefertigt ist.

14. Dynamoelektrische rotatorische Maschine (M,MG) mit einem Gehäuse (1) nach einem der Ansprüche 11 bis 13.
